Europäisches Patentamt

European Patent Office

Office européen des brevets

(19)

(11) EP 0 989 770 B1

(12) **EUROPEAN PATENT SPECIFICATION**

(45) Date of publication and mention
of the grant of the patent:
**15.01.2003 Bulletin 2003/03**

(51) Int Cl.⁷: **H04Q 11/04**, H04L 12/56,
H04L 29/06

(21) Application number: **99118019.1**

(22) Date of filing: **21.09.1999**

(54) **Packet transfer control apparatus and scheduling method therefor**

Vorrichtung und Verfahren zur Kontrolle der Paketübertragung und der Planung der Reihenfolge der Übertragung der Pakete

Dispositif et procédé pour contrôler la transmission de paquets et pour ordonnancer la séquence de transmission de ces paquets

(84) Designated Contracting States:
**DE FR GB**

(30) Priority: **22.09.1998 JP 26767398**

(43) Date of publication of application:
**29.03.2000 Bulletin 2000/13**

(73) Proprietor: **FUJITSU LIMITED**
**Kawasaki-shi, Kanagawa 211-8588 (JP)**

(72) Inventors:
• **Xu, Yan**
  **Nakahara-ku, Kawasaki-shi, Kanagawa 211 (JP)**
• **Chugo, Akira**
  **Nakahara-ku, Kawasaki-shi, Kanagawa 211 (JP)**

(74) Representative: **HOFFMANN - EITLE**
**Patent- und Rechtsanwälte**
**Arabellastrasse 4**
**81925 München (DE)**

(56) References cited:
**EP-A- 0 710 046        EP-A- 0 763 915**

• **STILIADIS D ET AL: "EFFICIENT FAIR QUEUEING ALGORITHMS FOR PACKET-SWITCHED NETWORKS" IEEE / ACM TRANSACTIONS ON NETWORKING,US,IEEE INC. NEW YORK, vol. 6, no. 2, page 175-185 XP000751630 ISSN: 1063-6692**
• **FLOYD S ET AL: "LINK-SHARING AND RESOURCE MANAGEMENT MODELS FOR PACKET NETWORKS" IEEE / ACM TRANSACTIONS ON NETWORKING,US,IEEE INC. NEW YORK, vol. 3, no. 4, page 365-386 XP000520857 ISSN: 1063-6692**

## Description

The present invention relates to a packet transfer control apparatus having a multi-queue configuration provided with a plurality of queues for storing packets and a scheduling method therefor, more particularly relates to a packet transfer control apparatus for efficiently selecting and outputting a packet capable of finishing being transferred the earliest from among head packets in the queues and a scheduling method therefor.

EP-A-0 763 915 describes a packet transfer device and a method adaptive to a large number of input ports. A control unit determines the selected class of packets to be outputted from input buffers according to a packet storage state in a packet storage means of the input buffers as a whole for each class, and issues a command specifying the selected class to the input buffers.

EP-A-0 710 046 describes an ATM cell scheduler. In order to schedule the transmission of a number of data streams over a common communication link, each of the data streams conforms to a corresponding set of flow control parameters. Each of the data streams to be transmitted on the communication link is stored in a corresponding queue. The status of each queue is maintained, and a target transmission time is calculated for each queue. Signals are then generated for each queue after the target transmission time, and these signals are used to indicate to a corresponding queue that it can transmit a cell on the link. Upon reception of a corresponding signal, a queue then transmits at least one cell onto the communication link.

In a packet transfer network, in order to guarantee the quality of service (QoS) for every flow (a plurality of consecutive packets which a user has requested the transfer of) and to utilize resources such as the transmission paths (bandwidth available for transmission) to the maximum to improve the service, it is requested that the packet transfer control apparatus be provided with a "weighted multi-queueing" function where it is provided with a plurality of queues corresponding to the flows and weight the queues with an order of transfer so as to control them for a fair packet transfer among queues and a "fair queueing" function where remaining resources (leftover bandwidth) are fairly distributed among flows temporarily so as to make efficient use of the resources.

In the case of traffic data such as file transfer protocol (FTP) data or world wide web (WWW) data, it is considered important to transfer the data of each flow fairly at a high speed by utilizing the resources to the maximum limit. The routers etc. of gateways of the network have been required to perform high speed processing, in correspondence with the high speed output links, of control for allocating to each flow and guaranteeing a bandwidth reserved for each of these flows (or sets of flows) and, at the same time, fairly reallocating the leftover resources in output links among these flows.

On the other hand, in the case of voice traffic data such as voice over IP (VoIP), it is more important that a fixed transfer rate be guaranteed and a delay jitter be minimized rather than the bandwidth of the links being used fairly and to the maximum limit.

The present invention deals with the transfer of packets with different required qualities of service (QoS), focuses on:

1) a structure for performing high speed processing of transfer order control (scheduling) of individual packets in accordance with different requests for quality of service for every type of the traffic data and
2) a structure for linking these individual structures and effectively utilizing the entire bandwidth, and

will be applied to high speed multimedia networks in the future.

As fair queuing techniques, weighted fair queueing (WFQ) and start-time fair queueing (SFQ) are well known.

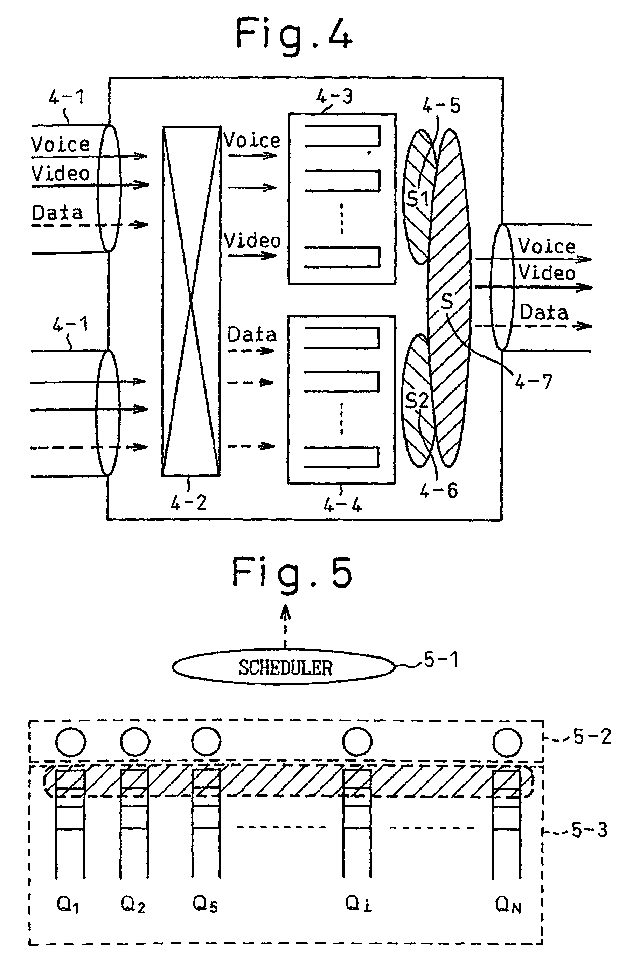

The principle of fair queuing based on weighted fair queueing (WFQ) will be explained in detail later by using Fig. 5. As clear from the explanation using Fig. 5, in transfer control by weighted fair queueing (WFQ), the scheduled transfer finish times $F_{i,1}$ are calculated for the respective head packets in the queues $Q_i$ ($i = 1, 2, ..., N$) and priority is assigned to the order of output by the calculated value so as to achieve fairness of the packet transfer among flows and the effective utilization of resources.

The scheduled transfer finish times $F_{i,1}$ of the head packets in the queues $Q_i$ are calculated by equation (1) given later.

The calculation of equation (1) includes the calculation of the bandwidths allocated to the queues $Q_i$. These vary due to the change of the backlog queues with every transfer of a packet as shown in equation (2) and equation (3) given later. The allocated bandwidths $r_{i,1}$ of the next head packets cannot be correctly calculated before the end of the output processing of the packets immediately before them.

Namely, whenever a new head packet is output, the calculation must be redone. In addition, the results of the calculations for the scheduled head packet transfer finish times $F_{i,1}$ of the queues calculated at the time of the previous packet outputs cannot be used at all for the next packet outputs even for head packets remaining in the queues $Q_i$ without being selected. This invited an increase in the amount of calculation.

On the other hand, known in the art is the technique of introducing virtual time in order to solve the problem of the increase of the amount of calculation due to the change of the allocated bandwidths $r_{i,1}$. By utilizing virtual time, equation (1) can also be represented by an equation including a virtual time V(t), a sum value $\Phi_b$

of the reserved bandwidths of the backlog queues and the resource bandwidth R as will be explained later.

The virtual time V(t) is recalculated whenever the sum value $\Phi_b$ of the reserved bandwidths of the backlog queues and the resource bandwidth R change, but realization is easy since the scheduled transfer finish time $F_{i,1}$ can be determined at the time of arrival of the packet.

When virtual time is introduced, the time axis of the scheduled transfer finish time $F_{i,1}$ ends up becoming its own axis which is different from the actual time axis. Thus, when a plurality of schedulers for controlling the order of transfer of the packets are provided in accordance with the quality of service request (QoS), the time axes end up becoming different among schedulers. Therefore, there is a problem that the link among schedulers, for example, the processing for selecting the output packet having the top priority among the schedulers, becomes difficult.

Further, it has been sometimes pointed out that, if a control of the packet transfer is achieved by the fair reallocation of resources like weighted fair queueing (WFQ) without using virtual time, the amount of calculation for determining the order of the transfer (scheduling) becomes extremely large, so it is difficult to apply this to a high speed link.

Therefore, an object of the present invention is to provide a packet transfer control apparatus, and a scheduling method therefor, which greatly reduce the amount of calculation for scheduling of the packet transfer in fair queueing for guaranteeing different qualities of service (QoS) for the respective flows and utilizing the resources of the transmission paths to the maximum limit, which enable high speed packet transfer processing, and which in addition can easily achieve a link among a plurality of provided schedulers in accordance with the requested qualities of service (QoS).

According to one aspect of the invention, there is provided a packet transfer control apparatus for packets stored in a plurality of queues to which are allocated reserved bandwidths individually determined in advance, each queue comprising a head packet and further packets, comprising a scheduler for controlling the transfer by weighting the order of transfer for each head packet in the queues, characterized in that the scheduler comprises means for allocating the head packets in the queues into clusters in accordance with the ratio between the packet length of the head packet in each queue and the reserved bandwidth of the packet; and means for selecting the packet having the earliest scheduled transfer finish time as the top priority transfer packet from among each first order packet inside the clusters.

According to another aspect of the invention, there is provided a packet transfer control apparatus for packets stored in a plurality of queues to which are allocated reserved bandwidths individually determined in advance, each queue comprising a head packet and further packets, the apparatus provided with at least one scheduler which controls the transfer by weighting the order of transfer for the head packets in the queues in the order from the packet having the earliest scheduled transfer finish time and, at the same time, allocating the bandwidths to all of the active queues in which packets to be transferred are stored; characterized in that the scheduler comprises: a clustering means for dividing the head packets in the queues into clusters in accordance with a scheduled resource occupation time which is defined as the ratio between the packet length of the head packet in each queue and the reserved bandwidth; a cluster managing means for holding the packets having the earliest scheduled transfer finish times among the packets in a cluster for all clusters as the first order packets; an inside-cluster selecting means for selecting the packet having the earliest scheduled transfer finish time for the cluster as the first order packet when a packet is deleted or added inside the cluster; and an inter-cluster selecting means for selecting the packet having the earliest scheduled transfer finish time as the top priority transfer packet from among the first order packets inside the clusters.

The above object and features of the present invention will be more apparent from the following description of the preferred embodiments given with reference to the accompanying drawings, wherein:

Fig. 1 is an explanatory view of the principle of packet transfer control of the present invention;
Fig. 2 is a graph of the relationship between a scheduled transfer finish time $F_{i,1}$ and a reserved bandwidth use ratio;
Figs. 3A and 3B are views of the configuration of a packet transfer control apparatus of the present invention;
Fig. 4 is an explanatory view of the packet transfer control by a plurality of schedulers in the present invention; and
Fig. 5 is an explanatory view of the principle of weighted fair queueing (WFQ).

Before describing the embodiments of the present invention, the related art and the disadvantages therein will be described with reference to the related figures.

As already explained, as fair queueing techniques, weighted fair queueing (WFQ) and start-time fair queueing (SFQ) are known.

The principle of the fair queueing based on weighted fair queueing (WFQ) will be explained by using Fig. 5. In Fig. 5, 5-1 is a scheduler for packet transfer, 5-2 are meters provided in correspondence with the queues, and 5-3 is a multi-queue comprised by N number of queues ($Q_1$ to $Q_N$) corresponding to the flows.

Each queue 5-3 stores packets for every flow. The packets are processed with FIFO in each queue.

The scheduler 5-1 performs the processing for selecting the packet for which the transfer can be finished earliest from among the head packets stored in the queues 5-3 and outputting this packet to the output link.

In this way, in transfer control by weighted fair queueing (WFQ), the scheduled transfer finish times $F_{i,1}$ are calculated for the head packets of all of the queues $Q_i$ (i = 1, 2, ..., N) and priority is assigned to the order of output by the thus calculated values to achieve fairness of the packet transfer among flows and effective utilization of resources.

The scheduled transfer finish times $F_{i,1}$ of the head packets in the queues $Q_i$ are calculated by the following equation (1) :

$$F_{i,1} = \max\{S_{i,0} + L_{i,0}/r_{i,0}; \ t_{i,1}\} + L_{i,1}/r_{i,1} \qquad (1)$$

Here, max { ; } means the maximum value between the two values divided by the semicolon in the brackets. Further, $S_{i,0}$ etc. are as follows. Note that the first subscript is the number of the queue (flow), and the second subscript is the order in the queue.

$S_{i,0}$ is the transfer start time of the packet immediately preceding the present head packet in a queue $Q_i$ (hereinafter referred to as the "preceding packet"),

$L_{i,0}$ is the packet length of the preceding packet in a queue $Q_i$,

$r_{i,0}$ is the bandwidth allocated to a queue $Q_i$ at the time of transfer of the preceding packet in the queue $Q_i$,

$t_{i,1}$ is the time when the head packet in a queue $Q_i$ arrived at (is stored in) the queue $Q_i$,

$L_{i,1}$ is the packet length of the head packet in a queue $Q_i$, and

$r_{i,1}$ is the bandwidth allocated to a queue $Q_i$ at the time of transfer of the head packet in the queue $Q_i$.

$S_{i,0}$, $L_{i,0}$, $L_{i,1}$, and $t_{i,1}$ mentioned above are fixed values determined at the start of the packet transfer or the arrival of the packet. The values thereof are stored and held in the meters 5-2 in correspondence with the queues $Q_i$, but $r_{i,0}$ and $r_{i,1}$ mentioned above must be obtained by calculation as follows:

$$R_{i,0} = (\Phi_i/\Phi_{b(0)}) \times R \qquad (2)$$

$$r_{i,1} = (\Phi_i/\Phi_{b(1)}) \times R \qquad (3)$$

Here, $\Phi_i$ is the reserved bandwidth of a queue $Q_i$, i.e., the bandwidth allocated for the packet transfer to the queue $Q_i$.

$\Phi_{b(0)}$ is the sum value of the reserved bandwidths for the backlog queues at the time of transfer of the preceding packet, that is, $\Phi_{b(0)} = \Sigma\Phi_j$ (j: backlog queues at the time of transfer of the preceding packet),

$\Phi_{b(1)}$ is the sum value of the reserved bandwidths for the backlog queues at the time of transfer of the head packet, that is, $\Phi_{b(1)} = \Sigma\Phi_j$ (j: backlog queues at the time of transfer of the head packet), and

R is the entire output bandwidth of the resources, where $\Phi_{b(0)} \leq R$ and $\Phi_{b(1)} \leq R$ stand.

Further, the above mentioned "backlog queue" means a queue in which at least one untransferred packet (backlog) is stored and is a queue in which at least one packet requiring a transfer operation is stored, therefore is also referred to as an "active queue".

The bandwidth $r_i$ allocated to each queue $Q_i$ varies according to the number of the backlog queues. As apparent from equation (2) or (3), when $\Phi_b = R$, it becomes the bandwidth $\Phi_i$, while when $\Phi_b = \Phi_i$, it becomes the maximum bandwidth R.

Here, the first term on the right side of equation (1) represents the transfer start reference time of the head packet in a queue $Q_i$. The larger value between the transfer finish time $(S_{i,0} + L_{i,0}/r_{i,0})$ of the preceding packet and the head packet arrival time $t_{i,1}$ is given as the transfer start reference time. The second term on the right side of equation (1) is the time required for the transfer of the head packet.

The scheduler 5-1 performs control for selecting and transferring the packets in the order from the one having the smallest value of the scheduled transfer finish time $F_{i,1}$. Accordingly, the priority order of transfer is lowered for a queue requiring a long time for the transfer of the preceding packet and a queue with a head packet requiring a long time for the transfer, thus fair packet transfer is carried out among queues.

In this way, in weighted fair queueing (WFQ), the weighted control of the order of transfer by the scheduled transfer finish times $F_{i,1}$ is carried out with respect to the packets for all of the queues to achieve fair packet transfer among queues and, at the same time, unused reserved bandwidths (remaining resources) are fairly allocated to active queues in accordance with their reserved bandwidths to effectively reuse the resources, and thereby the packets in active queues are transferred at a higher speed so as to improve the service.

However, the number of backlog queues always varies, so the bandwidths $r_i$ to be allocated to the queues $Q_i$ always vary as well and therefore the scheduled transfer finish times $F_{i,1}$ of the head packets in the queues $Q_i$ vary.

Accordingly, the scheduler 5-1 had performed the processing for calculating the scheduled transfer finish times $F_{i,1}$ of the head packets by equation (1), equation (2), and equation (3) for all of the head packets in the backlog queues whenever one packet was output and then selecting, transferring, and outputting the head packet in the queue $Q_{out}$ with the smallest scheduled transfer finish time $F_{out,1}$ from among these calculated values as described in the following equation (4):

$$F_{out,1} = \min\{F_{i,1}, i : \text{backlog queue}\} \qquad (4)$$

The calculation of equation (1) mentioned above includes the calculation of the bandwidths $r_{i,0}$ and $r_{i,1}$ allocated to the queues $Q_i$. These vary due to the change of the backlog queues with every transfer of a packet as shown in equation (2) and equation (3). The allocated bandwidths $r_{i,1}$ of the next head packets cannot be correctly calculated before the end of the output processing of the packets immediately before this.

Namely, whenever a new head packet is output, the calculation must be redone. In addition, the results of the calculations for the scheduled head packet transfer finish times $F_{i,1}$ of the queues calculated at the time of the previous packet outputs cannot be used at all for the next packet outputs even for head packets remaining in the queues $Q_i$ without being selected. This invited an increase in the amount of calculation.

On the other hand, known in the art is the technique of introducing virtual time in order to solve the problem of the increase of the amount of calculation due to the change of the allocated bandwidths $r_{i,1}$. By utilizing virtual time, equation (1) can be interpreted as:

$$F_{i,1} = \max\{F_{i,0}; V(t_{i,1})\} + L_{i,1}/\Phi_{i,1} \qquad (1')$$

where,

$$V(t_{i,1}) = V(t_{i,0}) + (R/\Phi_b) \cdot (t_{i,1} - t_{i,0})$$

$$V(0) = 0$$

The virtual time $V(t)$ is recalculated whenever the sum value $\Phi_b$ of the reserved bandwidths of the backlog queues and the resource bandwidth R change, but realization is easy since the scheduled transfer finish time $F_{i,1}$ can be determined at the time of arrival of the packet.

However, when virtual time is introduced, the time axis of the scheduled transfer finish time $F_{i,1}$ ends up becoming unique its own axis which is different from the actual time axis. Thus, when a plurality of schedulers for controlling the order of transfer of the packets are provided in accordance with the quality of service request (QoS), the time axes end up becoming different among schedulers. Therefore, there is a problem that the link among schedulers, for example, the processing for selecting the output packet having the top priority among the schedulers, becomes difficult.

Further, it has been sometimes pointed out that, if a control of the packet transfer is achieved by the fair reallocation of resources like weighted fair queueing (WFQ) without using virtual time, the amount of calculation for determining the order of the transfer (scheduling) becomes extremely large, so it is difficult to apply this to a high speed link.

The present invention provides a packet transfer control apparatus, and a scheduling method therefor, which greatly reduce the amount of calculation for scheduling of the packet transfer in fair queueing for guaranteeing different qualities of service (QoS) for the respective flows and utilizing the resources of the transmission paths to the maximum limit, which enable high speed packet transfer processing, and which in addition can easily achieve a link among a plurality of provided schedulers in accordance with the requested qualities of service (QoS).

When further concretely describing this, to solve the problem, in the calculation for selecting the top priority packet to be output for transfer, (i) the range of the packets directly influenced by the change of the bandwidths $r_{i,1}$ allocated to the queues $Q_i$ is limited so as to calculate the scheduled transfer finish times $F_{i,1}$ with respect to only limited packets and (ii) the results of the past calculations are reused for other packets to omit the above calculations, whereby a reduction of the amount of calculation of the weighted fair queueing (WFQ) is achieved.

To achieve the above object, there may be provided a packet transfer control apparatus having a multi-queue configuration provided with a plurality of queues each storing packets and a scheduling method therefor wherein, when processing to select and transfer the head packet having the earliest scheduled transfer finish time from the head packets in N number of queues $Q_i$ to $Q_N$ (1-2) provided in correspondence with the respective flows, a scheduler (1-1) clusters head packets having a low dependency upon changes in relative order of the scheduled transfer finish times with respect to changes in the entire reserved bandwidths of the backlog queues, holds the first order packets having the earliest scheduled transfer finish times among the clusters $C_1$ to $C_M$, reuses the output priorities in the clusters calculated in the past as they are at the output for transfer of the packets to calculate the scheduled transfer finish times for only the first order packets in the clusters among the clusters, and selects the packet with the earliest calculated time as the top priority packet. As a result, the amount of calculation for selecting the packet to be transferred with the top priority is greatly reduced whereby high speed packet transfer processing is enabled.

In general, the present system provides a packet transfer control apparatus comprising: a scheduler for controlling the transfer by weighting the order of transfer for each head packet in the queues, the scheduler comprising: means for dividing each head packet in the queues into clusters in accordance with the ratio between the packet length of the head packet in each queue and the reserved bandwidth of the packet, and means for selecting the packet having the earliest scheduled transfer finish time as the top priority transfer packet from among each first order packet inside the clusters.

According to the present system,

(1) there is provided a packet transfer control apparatus provided with at least one scheduler which controls the transfer by weighting the order of transfer for the head packets in the queues in the order from the packet having the earliest scheduled transfer finish time for packets stored in a plurality of queues to which are allocated reserved bandwidths individually determined in advance and, at the same time, allocating the resources (bandwidths) of the entire transmission system to all of the active queues in which packets to be transferred are stored, wherein the scheduler is provided with a clustering means for dividing the head packets in the queues into clusters in accordance with the ratio between the packet length of the head packet in each queue and the reserved bandwidth (hereinafter referred to as the scheduled resource occupation time), a cluster managing means for holding the packets having the earliest scheduled transfer finish times among the packets in a cluster for all clusters as the first order packets, an inside-cluster selecting means for selecting the packet having the earliest scheduled transfer finish time for the cluster as the first order packet when a packet is deleted or added inside the cluster, and an inter-cluster selecting means for selecting the packet having the earliest scheduled transfer finish time as the top priority transfer packet from among the first order packets in the clusters.

(2) The scheduler may be provided with a reserved bandwidth use ratio computing means for computing the ratio (hereinafter referred to as the reserved bandwidth use ratio) of a cumulative value of the reserved bandwidths for the active queues with respect to the resources (bandwidths) of the entire transmission system, and said inter-cluster selecting means is structured to calculate the scheduled transfer finish time based on the transfer start reference time of each first order packet, the scheduled resource occupation time, and the reserved bandwidth use ratio.

(3) The inside-cluster selecting means may further be structured to sort the packets in a cluster in the order from the earliest scheduled transfer finish time, and the cluster managing means may be constituted so as to hold the packets sorted in the order from the earliest scheduled transfer finish time for every cluster.

(4) The inside-cluster selecting means may be structured to perform the selection by switching between processing for selecting only the first order packet having the earliest scheduled transfer finish time from the packets in a cluster and processing for sorting them in the order from the one having the earliest scheduled transfer finish time, perform the processing for sorting in the order from the one having the earliest scheduled transfer finish time when the transfer time of a packet in transmission is more than a predetermined time, and perform the processing for selecting only the first order packet having the earliest scheduled transfer finish time when the transfer time of the packet in transmission is not more than a predetermined time.

(5) The inside-cluster selecting means may further be constituted so as to select the packet having the earliest scheduled transfer finish time based on only the transfer start reference time of each packet in the cluster or the transfer start reference time and the scheduled resource occupation time.

(6) The inside-cluster selecting means may further be constituted so as to sort the packets in the cluster in the order from the one having the earliest scheduled transfer finish time based on only the transfer start reference time of each packet in the cluster or the transfer start reference time and the scheduled resource occupation time.

(7) The clustering means may be constituted so as to divide the head packets in the queues into clusters by discriminating the type of the application packet having traffic characteristics for which the scheduled resource occupation time is specified.

(8) The packet transfer control apparatus may be provided with a plurality of schedulers which perform different processing for allocation of the resources of the entire transmission system for packets stored in multi-queues differing for all clusters in accordance with the class of the quality of service. In this case, each scheduler is provided with a means for selecting the packet having the earliest scheduled transfer finish time from among the head packets for every multi-queue. Further, provision is made of a scheduler for selecting the packet having the earliest scheduled transfer finish time from among packets selected by the schedulers corresponding to the multi-queues.

(9) At least one scheduler among the schedulers corresponding to the multi-queues is provided with a means for allocating bandwidths of a fixed rate to queues in the corresponding multi-queues and selecting the packet having the earliest scheduled transfer finish time.

According to another aspect of the present invention, (10) there is provided a packet transfer scheduling method which transfers packets by weighting the order of transfer for head packets of queues in the order from the packet having the earliest scheduled transfer finish time for packets stored in a plurality of queues to which are allocated at least reserved bandwidths individually determined in advance and, at the same time, allocating resources (bandwidths) of the entire transmission system to all of the active queues in which packets to be transferred are stored, comprising a step of dividing the head packets of the queues into clusters in accordance with scheduled resource occupation times of the head packets in the queues, a step of selecting the packet having the earliest scheduled transfer finish time for a cluster as a first order packet when a packet is deleted or added to packets in the cluster and holding this selected packet, and a step of selecting the packet having the earliest scheduled transfer finish time from among the first order packets in the clusters as a top priority transfer packet.

(11) The packet transfer scheduling method may further comprise a step of computing a reserved bandwidth use ratio of active queues and a step of calculating a scheduled transfer finish time during the selection among clusters based on the transfer start reference time of the first order packet, the scheduled resource occupation time, and the reserved bandwidth use ratio.

(12) The packet transfer scheduling method may further comprise, when achieving the selection in the clusters, a step of sorting the packets in a cluster in the order from the earliest scheduled transfer finish time and holding the sorted packets.

(13) The packet transfer scheduling method may further comprise, when achieving the selection in the clusters, a step of performing processing for sorting in the order from the packet having the earliest scheduled transfer finish time when the transfer time of a packet in transmission is more than a predetermined time and performing processing for selecting only the first order packet having the earliest scheduled transfer finish time when the transfer time of the packet in transmission is not more than a predetermined time.

(14) The packet transfer scheduling method may further comprise, when achieving the selection in the clusters, a step of selecting the packet having the earliest scheduled transfer finish time based on only the transfer start reference time of each packet in the cluster or the transfer start reference time and the scheduled resource occupation time.

(15) The packet transfer scheduling method may further comprise, when achieving the selection in the clusters, a step of sorting the packets in the cluster in the order from the one having the earliest scheduled transfer finish time based on only the transfer start reference time of each packet in the cluster or the transfer start reference time and the scheduled resource occupation time.

(16) The packet transfer scheduling method may further comprise, when achieving the selection in the clusters, a step of dividing the head packets of queues into clusters by discriminating the type of the application packet having traffic characteristics for which the scheduled resource occupation time is specified.

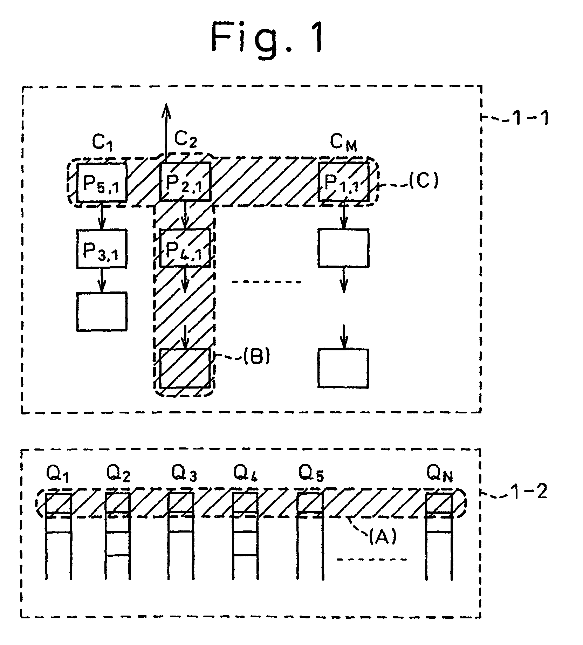

Turning now to specific embodiments of the present invention, Fig. 1 is an explanatory view of the principle of the packet transfer control by weighted fair queueing (WFQ) according to the present invention. In the figure, 1-1 is the scheduler for controlling transfer by clustering the packets, and 1-2 is the multi-queue comprising N number of queues ($Q_i$ to $Q_N$) for storing packets in correspondence with flows.

The internal structure of the queues $Q_i$ (i = 1, 2, ···, N) does not have any direct bearing upon the packet transfer control of the present invention, so it is assumed that the queues $Q_i$ are comprised so as to perform the packet storing processing by the general FIFO (First in First Out) method.

The scheduler 1-1 performs the clustering of the head packets in the queues $Q_i$ (hatching part (A) in the figure) based on the scheduled resource occupation time $\beta_{i,1}$ required for the transfer of each packet. Figure 1 shows an example of controlling the transfer by classifying the head packets in the queues $Q_i$ into M number of clusters $C_1$ to $C_M$.

The scheduled resource occupation time $\beta_{i,1}$ required for each packet transfer is calculated from the packet length $L_{i,1}$ of the head packet in each queue $Q_i$ and the reserved bandwidth $\Phi_i$ of each queue $Q_i$ by the following equation:

$$\beta_{i,1} = L_{i,1}/\Phi_i$$

Namely, $\beta_{i,1}$ is the time required for transferring the packet having the packet length $L_{i,1}$ under the reserved bandwidth $\Phi_i$ minimally allocated to the queue $Q_i$.

In actuality, as mentioned above, due to the weighted fair queueing (WFQ), if there is unused reserved bandwidth, that unused reserved bandwidth is also allocated to the active queues with a predetermined ratio. Accordingly, the resource occupation time will become shorter than the $\beta_{i,1}$, so the $\beta_{i,1}$ will be referred to as the scheduled resource occupation time.

The scheduler 1-1 clusters each head packets into any one of M number of clusters $C_1$ to $C_M$ in accordance with the values of the scheduled resource occupation times $\beta_{i,1}$ of the head packets. Figure 1 shows an example of a case where a head packet $P_{5,1}$ in the queue $Q_5$ and a head packet $P_{3,1}$ in the queue $Q_3$ are clustered into the cluster $C_1$, a head packet $P_{2,1}$ in the queue $Q_2$ and a head packet $P_{4,1}$ in the queue $Q_4$ are clustered into the cluster $C_2$, and a head packet $P_{1,1}$ in the queue $Q_1$ is clustered into the cluster $C_M$.

The scheduler 1-1 registers the head packet having the scheduled transfer finish time $F_{i,1}$ of the smallest value in the cluster as the first order packet to be output with the top priority in this cluster when newly incorporating a head packet in a queue into the cluster.

Further, when the first order packet in a cluster is selected as the transfer packet and sent to the output link, it also registers the packet having the scheduled transfer finish time $F_{i,1}$ of the smallest value from among the remaining packets in the cluster as the first order packet in the cluster.

In Fig. 1, the example where the packet $P_{2,1}$ is sent from the cluster $C_2$ and the next packet $P_{2,2}$ is incorporated from the queue $Q_2$ into the same cluster $C_2$ as the head packet is shown. When packets constituting one cluster change in this way, the packet having the smallest value of scheduled transfer finish time $F_{i,1}$ among the packets in that cluster (hatching part (B) in the figure) is registered as the first order packet.

The scheduler 1-1 performs control for calculating the scheduled transfer finish times $F_{i,1}$ for the first order packets in the clusters (packets $P_{5,1}$, $P_{2,1}$, ..., $P_{1,1}$ of the hatching part (C) in the example of Fig. 1), selecting the packet having the smallest value of $F_{i,1}$ as the packet to be transferred with the top priority, and sending the selected packet from the output link.

The principle of the packet transfer control of the present invention will be explained in further detail. The scheduler 1-1 shown in Fig. 1 is provided with meters (not shown) in correspondence with the queues $Q_i$. The meters are set with the parameters required for calculating the scheduled transfer finish times $F_{i,1}$ of the head packets in the queues.

The parameters set in the meters for the queues $Q_i$ are the transfer start reference time $\alpha_{i,1}$ of the head packets and the scheduled resource occupation times $\beta_{i,1}$ of the head packets. The transfer start reference time $\alpha_{i,1}$ of a head packet is calculated by the following equation:

$$\alpha_{i,1} = \max\{S_{i,0} + L_{i,0}/r_{i,0} ; t_{i,1}\} \qquad (5)$$

Here, $S_{i,0} + L_{i,0}/r_{i,0}$ is the scheduled transfer finish time of the packet immediately preceding the head packet (preceding packet), and $t_{i,1}$ is the arrival time of the head packet. The transfer start reference time $\alpha_{i,1}$ of the head packet becomes the larger value between values of the scheduled transfer finish time of the preceding packet and the arrival time of the head packet.

The scheduled resource occupation time $\beta_{i,1}$ is calculated by:

$$\beta_{i,1} = L_{i,1}/\Phi_i \qquad (6)$$

as mentioned above. The scheduled resource occupation time $\beta_{i,1}$ is the resource occupation time required for the transfer when the packets in the queues $Q_i$ are transferred with the reserved bandwidth $\Phi_i$ as the lowest allocated bandwidth. The bandwidths allocated to the queues $Q_i$ vary according to the change of the backlog queues, so the resource occupation times also vary. Accordingly, the scheduled resource occupation time $\beta_{i,1}$ is not an actual scheduled resource occupation time but one of the reference values used for the calculation of the scheduled transfer finish time $F_{i,1}$ as will be explained later.

The scheduler 1-1 calculates the reserved bandwidth use ratio $\gamma$ of the backlog queues as the parameter for further calculating the scheduled transfer finish times $F_{i,1}$ of the head packets. The reserved bandwidth use ratio $\gamma$ is the ratio of the sum value $\Phi_{b(1)}$ of the reserved bandwidths used by the backlog queues (active queues) with respect to the resources (bandwidth of entire output link) R and is calculated by the following equation:

$$\gamma = \Phi_{b(1)}/R \qquad (7)$$

The scheduled transfer finish time $F_{i,1}$ of the head packet of equation (1) can be modified as in the following equation (8) using the parameters $\alpha_{i,1}$, $\beta_{i,1}$, and $\gamma$ according to equation (3), equation (5), equation (6), and equation (7):

$$F_{i,1} = \alpha_{i,1} + L_{i,1}/\{(\Phi_1/\Phi_{b(1)}) \times R\}$$

$$= \alpha_{i,1} + (L_{i,1}/\Phi_i) \times (\Phi_{b(1)}/R)$$

$$= \alpha_{i,1} + \beta_{i,1} \times \gamma \qquad (8)$$

Here, the transfer start reference time $\alpha_{i,1}$ and the scheduled resource occupation time $\beta_{i,1}$ are calculated at the time when a packet becomes the head of the queue and are fixed values which will not change later, but the reserved bandwidth use ratio $\gamma$ is a value changing according to the change of the backlog queues.

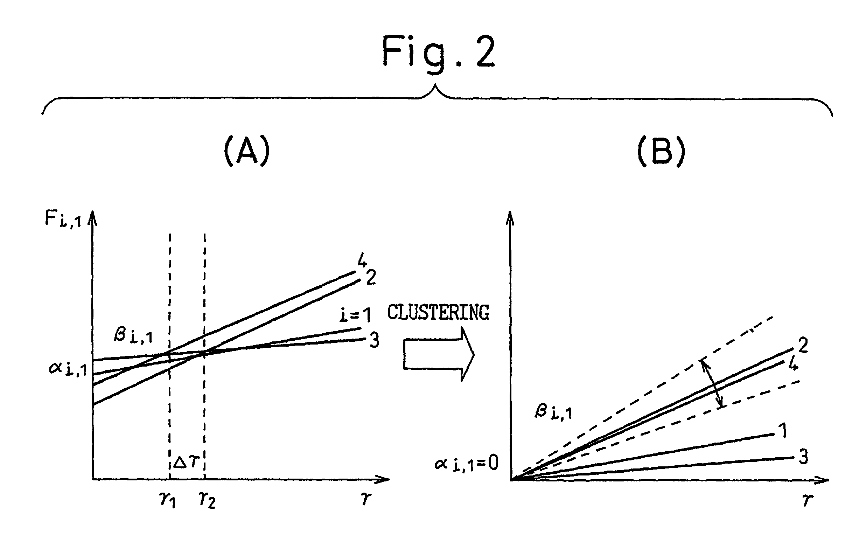

When representing the relationship between the scheduled transfer finish times $F_{i,1}$ and the reserved bandwidth use ratio $\gamma$ by equation (8) in a graph, as indicated by the slanted lines in (A) of Fig. 2, the scheduled transfer finish times $F_{i,1}$ change linearly with respect to a change of $\gamma$.

(A) of Fig. 2 shows an example of the scheduled transfer finish times $F_{i,1}$ (i = 1 to 4) of the head packets of the queues $Q_i$ (i = 1 to 4). The points of intersection between the slanted lines and the ordinate of the figure are $\alpha_{i,1}$, and the gradients of the slanted lines are $\beta_{i,1}$.

As will be understood from (A) of Fig. 2, in the case of scheduled transfer finish times $F_{i,1}$ of the packets not having a large difference of the gradient $\beta_{i,1}$ of the slanted line, even if the reserved bandwidth use ratio $\gamma$ changes, the probability of a change in the order of the scheduled transfer finish times $F_{i,1}$ of these packets is low. Even if there is a change, the time difference is minute.

In (A) of Fig. 2, there is not a large difference between the gradients $\beta_{i,1}$ of $F_{i,1}$ where i = 1 and $F_{i,1}$ where i = 3 and also there is not a large difference between the gradients $\beta_{i,1}$ of $F_{i,1}$ where i = 2 and $F_{i,1}$ where i = 4. In such a case, the relationship of magnitude between $F_{i,1}$ where i = 2 and $F_{i,1}$ where i = 4 does not change when there is a change of the reserved bandwidth use ratio $\gamma$. Further, the relationship of magnitude between $F_{i,1}$ where i = 1 and $F_{i,1}$ where i = 3 inverts after the two $F_{i,1}$ intersect midway, but since the gradients $\beta_{i,1}$ are close to each other, a large difference does not occur between the values of $F_{i,1}$ where i = 1 and $F_{i,1}$ where i = 3 per se.

(B) of Fig. 2 is a view of only the gradient $\beta_{i,1}$. Several (for example M number of) ranges are determined in advance for this gradient $\beta_{i,1}$. The clustering is carried out with respect to the head packets of the queues as mentioned before according to which range the gradient $\beta_{i,1}$ calculated by equation (6) belongs.

When performing the clustering of the head packets in this way, it is possible to make the dependency of the order of the scheduled transfer finish times $F_{i,1}$ of packets belonging into same cluster with respect to the change of $\gamma$ minute.

For example, in Fig. 2, when performing the clustering while assuming that the head packets in the queues where i = 1 and i = 3 belong to the same cluster and that the head packets in the queues where i = 2 and i = 4 belong to the same cluster, the probability of change of the order of the scheduled transfer finish times $F_{i,1}$ of the packets in queues $Q_i$ in the clusters calculated when $\gamma = \gamma_1$ is low even when $\gamma = \gamma_2$. Even if such a change occurs, the time difference thereof is small. Accordingly, even if an error occurs in the order of transfer, the influence thereof is small.

The packet selection processing at the time of packet transfer output includes (i) processing for calculating the scheduled transfer finish times $F_{i,1}$ by equation (8) for all packets in a cluster which output a packet immediately before or a cluster to which a new head packet is added (hatching part (B) of Fig. 1) and selecting the first order packets in which the calculated scheduled transfer finish times $F_{i,1}$ becomes the minimum (inside-cluster selection processing) and (ii) processing for calculating the scheduled transfer finish times $F_{i,1}$ by equation (8) between first order packets in the clusters (hatching part (C) of Fig. 1) and selecting the packet in which the calculated value becomes the minimum by equation (4) (inter-cluster selection processing).

Since it is sufficient to perform only the processing for sending the packet selected by the selection processing among clusters as the top priority transfer packet to the output link, therefore the amount of calculation can be greatly reduced compared with the case of the related art where the calculation of equation (8) was carried out with respect to the head packets in all backlog queues.

For example, if there are 100 backlog queues, there are 100 head packets for these backlog queues. In contrast to the related art where the processing for calculating the scheduled transfer finish times $F_{i,1}$ by equation (8) for 100 packets and selecting the packet having the minimum calculated value, in the present invention, when assuming that 100 head packets are clustered into 10 clusters each comprising 10 head packets on an average, it is sufficient to perform the inside-cluster selection processing for an average 10 packets and the inter-cluster selection processing for 10 clusters. Namely, it is sufficient to calculate the scheduled transfer finish times $F_{i,1}$ by equation (8) for only 20 packets, so the amount of calculation can be greatly reduced. At the same time, in the processing for selecting the one having the minimum calculated value as well, the number of objects to be selected is greatly decreased, so the amount of processing in this selection processing can be lowered.

In general, where the number of queues is N and the number of clusters is M, the number of the packets in the cluster becomes N/M on an average. Namely, by performing the clustering as in the present invention, the calculation which had been carried out with respect to N number packets in the related art may be carried out by only the inside-cluster processing with respect to N/M number packets and the inter-cluster processing with respect to M number of packets. Accordingly, since it is sufficient to carry out the calculation with respect to (N/M + M) number of packets, the amount of calculation can be greatly reduced.

Note that, in the inside-cluster selection processing mentioned above, in place of the processing for selecting the first order packets by the calculation of the scheduled transfer finish times $F_{i,1}$ by equation (8) using $\alpha_{i,1}$, $\beta_{i,1}$, and $\gamma$, the following simple processing is also possible. In a cluster, the scheduled resource occupation times $\beta_{i,1}$ of packets are values close to each other and the dependency upon the reserved bandwidth use ratio $\gamma$ is low, therefore packets are sorted in the order from the packet having the smallest value of the transfer start reference time $\alpha_{i,1}$ as the first sort key. Next, the packets having transfer start reference times $\alpha_{i,1}$ of values which are the same as or close to each other are sorted in the order from the packet having the smallest scheduled resource occupation times $\beta_{i,1}$ as the second sort key. Due to this, the packet having the scheduled transfer finish time $F_{i,1}$ near the smallest value can be selected by simple processing without using the reserved bandwidth use ratio $\gamma$.

Further, by using only the value of the transfer start reference time $\alpha_{i,1}$, even if the packet having the smallest value is selected as the first order packet, a large error will not occur in the selection result and the packet having the scheduled transfer finish time $F_{i,1}$ near the smallest value can be selected by further simple processing. In this case, the calculation of $\beta \times \gamma$ is not carried out, therefore the amount of calculation for the inside-cluster processing can be greatly reduced.

Further, in the inside-cluster selection processing, when performing selection using $\alpha_{i,1}$, $\beta_{i,1}$, and $\gamma$ mentioned above or selection using only $\alpha_{i,1}$ and $\beta_{i,1}$, it is also possible to apply (i) a procedure of registering only the selected first order packet, comparing the magnitude of the scheduled transfer finish times $F_{i,1}$ between the already registered first order packet and the packet to which a new packet is added when a new packet is added to the cluster, determining a new first order packet, and registering this, (ii) a procedure of sorting all packets in the cluster in the order from the packet having the smallest scheduled transfer finish time $F_{i,1}$, and further (iii) a procedure of switching the above procedures in accordance with the processing time permitted to the inside-cluster selection processing.

In general, there is a variation in lengths of packets. By utilizing this characteristic, when packets requiring a long time for transfer such as long packets are sent, a large time is given for performing the calculation for selecting the next output packet, therefore the packets in clusters are sorted during that time. When sending short packets at high speed or in selection processing in a cluster in which there has only been deletion, but no addition of a packet, by using the past sorted results as they are or by switching the operation to the processing for selecting only the first order packets, the amount of processing can be reduced. Even in a case where consecutive short packets are output, high speed selection processing can be carried out without deterioration of the precision or while accompanied with only a slight reduction of precision.

Note that whether or not a packet is one requiring a long time for transfer can be judged prior to the start of the sorting by division of the packet length L by the entire output bandwidth R, i.e., L/R, and the comparison of the calculated value with a threshold value. It is also possible to perform simple judgement by comparison of only the packet length with a threshold value.

Further, when calculating the scheduled transfer finish times $F_{i,1}$ for selecting a first order packet in inside-cluster selection processing, the inter-cluster selection processing calculates the scheduled transfer finish times $F_{i,1}$ for only the first order packets of the clusters other than the cluster for which the inside-cluster selection processing is being carried out, compares the smallest value among these calculated values with the scheduled transfer finish time $F_{i,1}$ calculated in the inside-cluster selection processing, and thereby selects the top priority packet to be transferred.

Further, in the transfer of the application packets in multimedia such as voice information or video information, in general, packets are transferred after classifying the packets into some grades in accordance with the required quality.

In each above grade, the traffic characteristics such as the reserved bandwidth $\Phi_1$ and the packet length $L_i$ are uniform. There are cases where the scheduled link occupation time $\beta_i$ ($\beta_i = L_i/\Phi_i$) is uniquely determined by discriminating the type of the application. In such a case, by discriminating the type of the traffic characteristic of the application packet, the clustering of the packets can be easily and correctly carried out.

Next, an explanation will be made of a concrete configuration of a packet transfer control apparatus using weighted fair queueing (WFQ) according to the present invention. Here, it is assumed that the packet transfer control apparatus performs the queueing for every flow. It performs the storage processing of packets by using FIFO inside each queue. Further, the packet data per se is stored in a not illustrated buffer. Further, it is assumed that the packet transfer control apparatus explained below processes only pointers for the packet data per se and parameters concerning the transfer control.

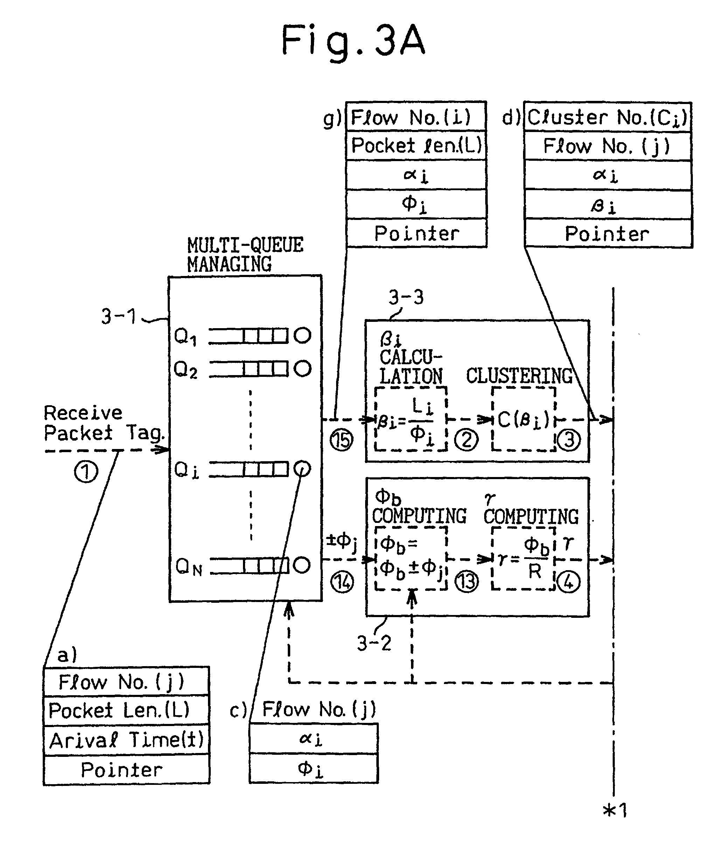

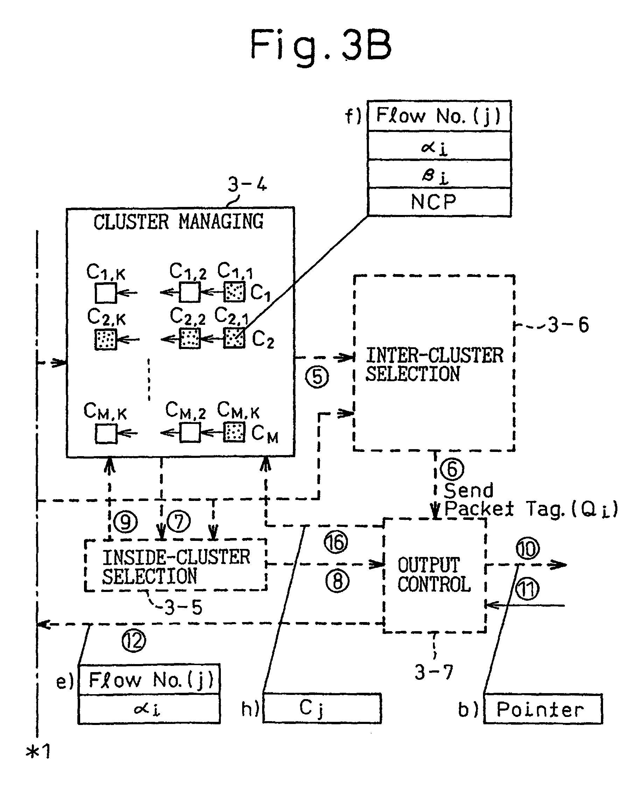

Figures 3A and 3B are views of the configuration of the packet transfer control apparatus of the present invention. In the figure, 3-1 is a multi-queue managing means, 3-2 is a reserved bandwidth use ratio $\gamma$ computing means, 3-3 is a clustering means, 3-4 is a cluster managing means, 3-5 is an inside-cluster selecting means, 3-6 is an inter-cluster selecting means, and 3-7 is an output control means.

The multi-queue managing means 3-1 is provided with queues $Q_i$ (i = 1 to N) in correspondence with flows and meters in correspondence with the queues $Q_i$. In each queue $Q_i$, packet tags each comprising a flow number "Flow No. (j)" of the received packet, packet length "PacketLen. (L)", arrival time (t), and a pointer of an address of the buffer for storing the packet data per se, are stored in the order of arrival.

In the meter corresponding to each queue $Q_i$, the transfer start reference time $\alpha_{i,1}$ of the head packet of that queue $Q_i$ and the bandwidth $\Phi_i$ reserved by that queue $Q_i$ are stored. The multi-queue managing means 3-1 is provided with a function of managing both the queues $Q_i$ in the active state in which at least one untransferred packet (backlog) is stored and meters corresponding to the queues and is provided with a function of outputting both the tag of the head packet of the corresponding queue and the parameter stored in the meter of that queue according to an output request.

Further, it is provided with a function of outputting the changed reserved bandwidth ($\pm\Phi$) when the active state of a queue changes. For example, when a queue $Q_i$ changes from the inactive state to the active state, the amount of increase ($+\Phi_i$) of that reserved bandwidth $\Phi_i$ is output to the reserved bandwidth use ratio $\gamma$ computing means 3-2. Conversely, when a queue $Q_i$ changes from the active state to the inactive state, the amount of decrease ($-\Phi_i$) of that reserved bandwidth $\Phi_i$ is output to the reserved bandwidth use ratio $\gamma$ computing means 3-2.

The reserved bandwidth use ratio $\gamma$ computing means 3-2 is provided with both a $\Phi_b$ computing unit

and a $\gamma$ computing unit. The $\Phi_b$ computing unit receives as its input the changed reserved bandwidth ($\pm\Phi$) from the multi-queue managing means 3-1 and computes the cumulative value $\Phi_b$ ($\Phi_b = \Phi_b \pm \Phi$) of the reserved bandwidths of active queues (backlog queues).

The $\gamma$ computing unit divides the cumulative value $\Phi_b$ of the reserved bandwidths of the active queues (backlog queues) by the bandwidth R of the entire resources (output link) and computes the ratio $\gamma$ of the reserved bandwidth $\Phi_b$ used by the entire active queues (backlog queues) to the bandwidth R.

The clustering means 3-3 is provided with both a $\beta_i$ calculating unit and a clustering processing unit C ($\beta_i$). The $\beta_i$ calculating unit divides the packet length $L_i$ of the head packet in a queue $Q_i$ by the reserved bandwidth $\Phi_i$ of the queue $Q_i$ ($L_i/\Phi_i$) to calculate the scheduled resource occupation time $\beta_i$ of the head packet.

The clustering processing unit C($\beta_i$) performs the processing for allocating the related packets to the clusters $C_1$ to $C_M$ in correspondence with ranges to which those values belong based on the values of the scheduled resource occupation times $\beta_i$ of the related packets.

The cluster managing means 3-4 is linked to the inside-cluster selecting means 3-5 and maintains the state where the packet having the smallest value $F_i$ among the scheduled transfer finish times $F_i$ of the packets in the cluster is selected as the first order packet of that cluster for each cluster $C_j$ (j = 1 to M).

Further, a parameter NCP (Next Cluster Pointer) indicating the pointer of the next order packet for maintaining the state where the packets in the cluster are sorted in the order from the smallest value of the scheduled transfer finish time $F_i$ is added to the packets in the cluster. The packets can be linked each other, in the cluster, in the order of sorting by the parameter NCP.

The inside-cluster selecting means 3-5 has a function of calculating the scheduled transfer finish times $F_i$ (= $\alpha_i + \beta_i \times \gamma$) of the packets in a cluster by a request from the cluster managing means 3-4 for one of the clusters stored in the cluster managing means 3-4, selecting the packet having the smallest that value $F_i$ among the scheduled transfer finish times $F_i$ of the packets as the first order packet, and returning this to the cluster managing means 3-4. Further, it has a function of outputting the scheduled transfer finish time $F_i$ of the first order packet to the output control means 3-7.

The inside-cluster selecting means 3-5 can use, as mentioned before, the procedure of selecting the scheduled transfer finish time from $\alpha_i$ and $\beta_i$, the procedure of sorting, or the procedure of appropriately switching these two procedures in accordance with the processing time.

The inter-cluster selecting means 3-6 calculates and selects the packet having the smallest value of the scheduled transfer finish time $F_i$ (= $\alpha_i + \beta_i \times \gamma$) from among the first order packets in the clusters $C_1$ to $C_M$ (note, except the cluster which was output immediately before this) and outputs that scheduled transfer finish time $F_i$ to the output control means 3-7.

The output control means 3-7 compares the scheduled transfer finish times $F_i$ input from the inside-cluster selecting means 3-5 and the inter-cluster selecting means 3-6, selects the packet having the smaller value $F_i$ as the top priority packet to be transferred, and outputs the packet tag thereof.

In order to perform similar processing with the next packet as the head packet for the queue $Q_i$ in which the tag of the packet transferred is stored, the output control means 3-7 activates the processing of the multi-queue managing means 3-1, the reserved bandwidth use ratio $\gamma$ computing means 3-2, and the clustering means 3-3 for the next head packet.

The functional means of the packet transfer control apparatus of the present invention were explained above. Here, an explanation will be made below of the processing operation by referring to the same Fig. 3 while classifying the processing operation into packet output processing and packet input processing. Note that, in the figure, the circled numbers correspond to the numbers in parentheses attached to the processing operation in the following explanation and represent the link positions among function modules to and from which the information concerning the related processing operations are input and output. Further, in the figure, the contents of the information input, output or held at the link or function modules are described in blocks a) to h) by attaching lead lines.

[1] Packet output processing

When the two conditions of both the completion of the packet output (10) by the output control means 3-7 and the output permission (11) of the next packet are satisfied, a request (12) for processing the next packet, as the head packet, in the queue $Q_i$ to which the packet which was output immediately before this belonged is sent from the output control means 3-7 to the multi-queue managing means 3-1, the reserved bandwidth use ratio $\gamma$ computing means 3-2, and the clustering means 3-3.

The multi-queue managing means 3-1 calls up the new head packet if an untransferred packet is stored in the queue $Q_i$, calculates the transfer start reference time $\alpha_i$ of the head packet, and stores the calculated value in the meter. Note, if the related queue $Q_i$ has become empty, the multi-queue managing means 3-1 does not outputs anything.

The transfer start reference time $\alpha_i$ is set as $\alpha_i = t$ when comparing the arrival time t of this packet and the scheduled transfer finish time $F_{i,0}$ of the packet sent immediately before this and $t \geq F_{i,0}$, while is set as $\alpha_i = F_{i,0}$ if $t < F_{i,0}$.

The multi-queue managing means 3-1 outputs (15) the parameters of the packet length $L_i$ and the reserved bandwidth $\Phi_i$ to the clustering means 3-3. Further, the multi-queue managing means 3-1 outputs (14) the change ($\pm\Phi$) of the available reserved bandwidth caused by the change of the active state of the queue to the reserved bandwidth use ratio $\gamma$ computing means 3-2.

The clustering means 3-3 calculates (2) the scheduled resource occupation time $\beta$ when the parameters are input, performs (3) the clustering for new head packets in accordance with this value $\beta$, and outputs the same to the cluster managing means 3-4.

The reserved bandwidth use ratio $\gamma$ computing means 3-2 computes (13) the cumulative value $\Phi_b$ of the reserved bandwidths of the backlog queues. When there is an output request (12) from the output control means 3-7, the cumulative value $\Phi_b$ of the reserved bandwidths is output to the $\gamma$ computing means, and the $\gamma$ computing means computes (4) the reserved bandwidth use ratio $\gamma$, that is, the ratio of the cumulative value $\Phi_b$ of the reserved bandwidths with respect to the bandwidth R of the entire resources, and outputs the same to the inside-cluster selecting means 3-5 and the inter-cluster selecting means 3-6.

The cluster managing means 3-4 waits for exactly a period for the clustering for the next head packet to be completed when the cluster $C_j$ to which the packet selected as the top priority output packet belonged is notified from the output control means 3-7 and sends (7) all packets belonging to that cluster $C_j$ to the inside-cluster selecting means 3-5. The inside-cluster selecting means 3-5 newly selects the first order packet from among these packets and returns (9) the same to the cluster managing means 3-4.

Further, when the next head packet is clustered into another cluster $C_k$, all packets of the other cluster $C_k$ are similarly sent (7) to the inside-cluster selecting means 3-5. The inside-cluster selecting means 3-5 newly selects the first order packet from among these packets and returns (9) the same to the cluster managing means 3-4.

The cluster managing means 3-4 outputs (5) the parameters ($\alpha_i$, $\beta_i$) of the first order packets in the clusters other than the cluster $C_j$ finally sent to the inside-cluster selecting means 3-5 to the inter-cluster selecting means 3-6.

The inside-cluster selecting means 3-5 calculates the scheduled transfer finish times $F_i$ (= $\alpha_i + \beta_i \times \gamma$) of the packets by using parameters $\alpha_i$ and $\beta_i$ of the packets input (7) from the cluster managing means 3-4 and new reserved bandwidth use ratio $\gamma$, selects the packet for which the scheduled transfer finish time $F_i$ becomes the smallest from among these $F_i$ as the first order packet, and outputs (8) this to the output control means 3-7 and, at the same time, returns (9) this to the cluster managing means.

The inter-cluster selecting means 3-6 calculates the scheduled transfer finish times $F_i$ (= $\alpha_i + \beta_i \times \gamma$) by using parameters ($\alpha_i$, $\beta_i$) of the first order packets of the input clusters and the new reserved bandwidth use ratio $\gamma$, selects the packet having the smallest $F_i$ from among these $F_i$ as a top priority candidate packet, and outputs this top priority candidate packet to the output control means 3-7 (6).

The output control means 3-7 selects and outputs (10) the packet having the smallest value of $F_i$ from among the scheduled transfer finish times $F_i$ input ((6), (8)) from the inter-cluster selecting means 3-6 and the inside-cluster selecting means 3-5 as the top priority transfer packet and, at the same time, requests (12) the processing with respect to the next output packet.

[2] Packet input processing

The multi-queue managing means 3-1 receives (1) the. packet tags of the packets for performing the transfer service and stores the packet tags in the queues $Q_i$ corresponding to the flows. At this time, when a queue $Q_i$ is a queue of the active state, the head packet has already existed in this queue, therefore, the input processing is finished by just adding the tag of the newly received packet to the queue $Q_i$.

When a packet arrives at a queue $Q_i$ in an empty state, this packet becomes the head packet, therefore the multi-queue managing means 3-1 calculates the transfer start reference time $\alpha_i$ of the packet and sets the $\alpha_i$ in the meter for the queue $Q_i$, outputs (15) both the packet length $L_i$ thereof and the reserved bandwidth $\Phi_i$ of the queue $Q_i$ to the clustering means 3-3, and outputs the amount of variation of the reserved use bandwidth (amount of increase $\Phi_i$) to the reserved bandwidth use ratio $\gamma$ computing means 3-2.

The clustering means 3-3 calculates the scheduled resource occupation time $\beta_i$ by $L_i/\Phi_i$ at the $\beta$ calculating unit, clusters the packets according to the value of the scheduled resource occupation time $\beta_i$ at the clustering processing unit $C(\beta_i)$, and outputs (3) the result to the cluster managing means 3-4.

The cluster managing means 3-4, linked with the inside-cluster selecting means 3-5, calculates the scheduled transfer finish times $F_i$ for the cluster $C_j$ to which a packet is newly added based on the first order packet in the cluster $C_j$, the parameters ($\alpha$, $\beta$) of the newly added packet, and the reserved bandwidth use ratio $\gamma$ and selects and holds the packet having the smallest scheduled transfer finish time $F_i$ as the new first order packet.

Figure 4 is an explanatory view of the packet transfer control by a plurality of schedulers according to the present invention. In the figure, 4-1 is an input link, 4-2 is a router (classifier), 4-3 is a first multi-queue, 4-4 is a second multi-queue, 4-5 is a first sub-scheduler, 4-6 is a second sub-scheduler, and 4-7 is an upper main scheduler thereof.

Figure 4 is an explanatory view for packet scheduling in a case where traffic packets of applications for which different qualities of service (QoS) are required are mixed such as the transfer of voice packets etc. where a low jitter is important or the transfer of WWW, FTP, and other data packets where a low delay and maximum transfer capability are important.

From the input link 4-1, traffic data having different quality of service (QoS) classes such as voice packets "Voice", video packets "Video", and data packets "Data" are input. The router 4-2 analyzes the header information of the input packets to classify these packets into flows to which they belong and stores the packets in the queues corresponding to the flows.

The queues are comprised as a plurality of multi-queues controlled by different schedulers in accordance with the quality of service required by the corresponding flows of the queues. The first multi-queue 4-3 stores the packets for which low jitter is required, for example, voice packets "Voice" and video packets "Video". The scheduling is controlled so that the predetermined output rate is guaranteed by the first sub-scheduler (S1) 4-5.

The first sub-scheduler (S1) 4-5 fixes $r_{i,0} = r_{i,1} = \Phi_i$ in equation (1) mentioned above since it is not necessary to reallocate the remaining bandwidth among the queues, calculates the scheduled transfer finish times $F_{i,1}$ of the head packets in the queues to select the packet having the smallest value $F_{i,1}$ as the top priority output packet.

The first sub-scheduler (S1) 4-5 has a light load of calculation processing since the allocated bandwidth $r_{i,1}$ is a fixed value, so can perform priority selection processing following at high speed even for processing of a flow comprised by short packets like voice packets.

On the other hand, packets for which a low delay is required like data packets are stored in the second multi-queue 4-4. The scheduling is controlled so that the remaining bandwidth is fairly allocated by the weighted fair queueing (WFQ) by the second sub-scheduler (S2) 4-6.

The weighted fair queueing (WFQ) has the excellent features of the guarantee of the minimum delay of the packets and the fair reallocation of remaining bandwidth among flows. The second sub-scheduler (52) 4-6 performs the clustering mentioned above in the calculation of the scheduled transfer finish times $F_{i,1}$ of the head packets in the queues, performs the calculation processing at high speed by limiting the head packets to be calculated, and selects the packet having the smallest value $F_{i,1}$ as the top priority output packet.

The upper main scheduler (S) 4-7 links the first and second sub-schedulers (S1, S2), selects the packet having the smallest scheduled transfer finish time $F_{i,1}$ as the output packet for the output candidate of the packet selected from the two (S1, S2), and outputs this.

By such processing, it is possible to guarantee low jitter and guarantee low delay for the flows in accordance with the quality of service (QoS) required by the flows and effectively utilizing the output link fairly among flows to the highest limit for the package transfer.

Summarizing the effects of the present invention, as explained above, in the processing of weighted fair queueing (WFQ) for selecting and transferring the head packet with the earliest scheduled transfer finish time from among the head packets in queues for which the scheduled transfer finish time varies due to the change of the sum value of the reserved bandwidths used by the backlog queues, by clustering the head packets with a low dependency of changes in the relative order of the scheduled transfer finish times on changes in the sum value of the reserved bandwidths of the backlog queues, calculating the scheduled transfer finish times with respect to only the first order packet in each queue by reusing the output priority order in each cluster calculated in the past as it is, and selecting the top priority packet, and thereby the amount of calculation in the weighted fair queueing (WFQ) processing can be greatly reduced.

Further, in the calculation of the scheduled transfer finish time, the time axis is the real time axis, therefore the selection processing with respect to the packets with the top priority individually selected by a plurality of schedulers becomes easy and the selection processings by the plurality of schedulers can be easily linked.

**Claims**

1. A packet transfer control apparatus for packets stored in a plurality of queues ($Q_i$) to which are allocated reserved bandwidths individually determined in advance, each queue comprising a head packet and further packets, comprising:

   a scheduler (1-1) for controlling the transfer by weighting the order of transfer for each head packet in the queues, **characterized in that** the scheduler comprises:

   means (3-4) for allocating the head packets in the queues into clusters ($C_i$) in accordance with the ratio between the packet length of the head packet in each queue ($Q_i$) and the reserved bandwidth ($\Phi_i$) of the packet; and
   means (3-5) for selecting the packet having the earliest scheduled transfer finish time as the top priority transfer packet from among each first order packet inside the clusters ($C_i$).

2. A packet transfer control apparatus for packets stored in a plurality of queues ($Q_i$) to which are allocated reserved bandwidths ($\phi_i$) individually determined in advance, each queue comprising a head packet and further packets, the apparatus provided with at least one scheduler (1-1) which controls the transfer by weighting the order of transfer for the head packets in the queues ($Q_i$) in the order from the packet having the earliest scheduled transfer finish time and, at the same time, allocating the reserved bandwidths to all active queues in which packets to be transferred are stored;

**characterized in that** the scheduler (1-1) comprises:

a clustering means (3-3) for dividing the head packets in the queues ($Q_i$) into clusters ($C_i$) in accordance with a scheduled resource occupation time which ratio is defined as the ratio between the packet length of the head packet in each queue ($Q_i$) and the reserved bandwidth ($\phi_i$)

a cluster managing means (3-4) for holding packets having the earliest scheduled transfer finish times among the packets in a cluster ($C_i$) for all clusters as first order packets;

an inside-cluster selecting means (3-5) for selecting the packet having the earliest scheduled transfer finish time for the cluster as the first order packet when a packet is deleted or added inside the cluster; and

an inter-cluster selecting means (3-6) for selecting the packet having the earliest scheduled transfer finish time as the top priority transfer packet from among the first order packets inside the clusters ($C_i$).

3. A packet transfer control apparatus as set forth in Claim 2, wherein:

said scheduler (1-1) is provided with a reserved bandwidth use ratio computing means (3-2) for computing the reserved bandwidth use ratio defined as the ratio of a cumulative value of the reserved bandwidths for the active queues with respect to the bandwidths; and

said inter-cluster selecting means (3-6) is structured to calculate the scheduled transfer finish time based on a transfer start reference time of each first order packet, the scheduled resource occupation time, and the reserved bandwidth use ratio.

4. A packet transfer control apparatus as set forth in Claim 2 or 3, wherein:

said inside-cluster selecting means (3-5) is structured to sort the packets in a cluster in the order from the earliest scheduled transfer finish time, and

said cluster managing means (3-4) may be constituted so as to hold the packets sorted in the order from the earliest scheduled transfer finish time for every cluster.

5. A packet transfer control apparatus as set forth in Claim 2 or 3, wherein:

said inside-cluster selecting means (3-5) is structured:

to perform the selection by switching between processing for selecting only the first order packet having the earliest scheduled transfer finish time from the packets in a cluster and processing for sorting them in the order from the one having the earliest scheduled transfer finish time;
to perform the processing for sorting in the order from the one having the earliest scheduled transfer finish time when the transfer time of a packet in transmission is more than a predetermined time; and
to perform the processing for selecting only the first order packet having the earliest scheduled transfer finish time when the transfer time of the packet in transmission is not more than a predetermined time.

6. A packet transfer control apparatus as set forth in any one of Claims 2, 3 and 5, wherein the inside-cluster selecting means (3-5) is constituted so as to select the packet having the earliest scheduled transfer finish time based on only said transfer start reference time of each packet in the cluster ($C_i$) or said transfer start reference time and said scheduled resource occupation time.

7. A packet transfer control apparatus as set forth in Claim 4 or 5, wherein said inside-cluster selecting means (3-5) is constituted so as to sort the packets in the cluster ($C_i$) in the order from the one having the earliest scheduled transfer finish time based on only said transfer start reference time of each packet in the cluster ($C_i$) or said transfer start reference time and said scheduled resource occupation time.

8. A packet transfer control apparatus as set forth in any one of Claims 2 to 7, wherein said clustering means (3-3) is constituted so as to allocate the head packets in the queues to clusters by discriminating the type of the application packet having traffic characteristics for which the scheduled resource occupation time is specified.

9. A packet transfer control apparatus as set forth in any one of Claims 2 to 8, wherein:

provision is made of a plurality of schedulers (4-5, 4-6) which perform different processing for allocation of the resources of an entire transmission system for packets stored in multi-queues differing for all clusters in accordance with the class of the quality of service;
each scheduler is provided with a means (3-5) for selecting the packet having the earliest scheduled transfer finish time from among the head packets for every multi-queue; and provision is made of a scheduler (4-7) for selecting the packet having the earliest scheduled transfer finish time from among packets selected by the schedulers corresponding to the multi-queues.

10. A packet transfer control apparatus as set forth in Claim 9, wherein at least one scheduler among said schedulers corresponding to the multi-queues is provided with a means for allocating bandwidths of a fixed rate to queues in the corresponding multi-queues and selecting the packet having the earliest scheduled transfer finish time.

11. A packet transfer scheduling method which transfers packets by weighting the order of transfer for head packets of queues ($Q_i$) in the order from the packet having the earliest scheduled transfer finish time for packets stored in a plurality of queues to which are allocated at least reserved bandwidths individually determined in advance and, at the same time, allocating bandwidths to all of the active queues in which packets to be transferred are stored,

   **characterized by**:

   the step of allocating the head packets of the queues to clusters ($C_i$) in accordance with scheduled resource occupation times of the head packets in the queues;
   the step of selecting the packet having the earliest scheduled transfer finish time for a cluster ($C_i$) as a first order packet when a packet is deleted or added to packets in the cluster ($C_i$) and holding this selected packet; and
   the step of selecting the packet having the earliest scheduled transfer finish time from among the first order packets in the clusters ($C_i$) as a top priority transfer packet.

12. A packet transfer scheduling method as set forth in claim 11, further comprising a step of computing a reserved bandwidth use ratio of active queues and the step of calculating a scheduled transfer finish time during the selection among clusters based on a transfer start reference time of the first order packet, the scheduled resource occupation time, and the reserved bandwidth use ratio.

13. A packet transfer scheduling method as set forth in claim 11 or 12, further comprising, when achieving the selection in the clusters ($C_i$), the step of sorting the packets in a cluster ($C_i$) in the order from the earliest scheduled transfer finish time and holding the sorted packets.

14. A packet transfer scheduling method as set forth in claim 11 or 12, further comprising, when achieving the selection in the clusters ($C_i$), the step of performing processing for sorting in the order from the packet having the earliest scheduled transfer finish time when the transfer time of a packet in transmission is more than a predetermined time and performing processing for selecting only the first order packet having the earliest scheduled transfer finish time when the transfer time of the packet in transmission is not more than a predetermined time.

15. A packet transfer scheduling method as set forth in claim 11, 12, or 14, further comprising, when achieving the selection in the clusters ($C_i$), the step of selecting the packet having the earliest scheduled transfer finish time based on only the transfer start reference time of each packet in the cluster ($C_i$) or the transfer start reference time and the scheduled resource occupation time.

16. A packet transfer scheduling method as set forth in claim 13 or 14, further comprising, when achieving the selection in the clusters ($C_i$), the step of sorting the packets in a cluster ($C_i$) in the order from the one having the earliest scheduled transfer finish time based on only the transfer start reference time of each packet in the cluster ($C_i$) or the transfer start reference time and the scheduled resource occupation time.

17. A packet transfer scheduling method as set forth in any one of claims 11 to 16, further comprising, when achieving the selection in the clusters ($C_i$), a step of allocating the head packets of queues to clusters ($C_i$) by discriminating the type of the application packet having traffic characteristics for which the scheduled resource occupation time is specified.

**Patentansprüche**

1. Eine Paketübermittlungs-Steuerungsvorrichtung für Pakete, welche in einer Vielzahl von Warteschlangen ($Q_i$) gespeichert sind, zu welchen reservierte Bandbreiten, die zuvor individuell bestimmt wurden, zugeordnet sind, wobei jede Warteschlange ein Kopfpaket und weitere Pakete aufweist, folgendes aufweisend:

   eine Ablaufsteuerung (1-1) zur Steuerung der Übermittlung durch Gewichtung der Reihenfolge der Übermittlung für jedes Kopfpaket in den Warteschlangen, **dadurch gekennzeichnet, dass** die Ablaufsteuerung folgendes aufweist:

eine Einrichtung (3-4) zur Zuordnung der Kopfpakete in den Warteschlangen in Gruppen ($C_i$) in Übereinstimmung mit dem Verhältnis zwischen der Paketlänge des Kopfpaketes in einer jeden Warteschlange ($Q_i$) und der reservierten Bandbreite ($\Phi_i$) des Paketes; und

eine Einrichtung (3-5) zur Selektierung des Paketes als das Top-Prioritäts-Übermittlungspaket, welches die früheste planmäßige Übermittlungsbeendigungszeit aufweist, aus der Menge der erstrangigen Pakete innerhalb der Gruppen ($C_i$).

2. Eine Paketübermittlungs-Steuerungsvorrichtung für Pakete, welche in einer Vielzahl von Warteschlangen ($Q_i$) gespeichert sind, zu welchen reservierte Bandbreiten ($\Phi_i$), die individuell im voraus bestimmt wurden, zugeordnet sind, wobei jede Warteschlange ein Kopfpaket und weitere Pakete aufweist, wobei die Vorrichtung mit wenigstens einer Ablaufsteuerung (1-1) versehen ist, welche die Übermittlung durch Gewichtung der Reihenfolge der Übermittlung für die Kopfpakete in den Warteschlangen ($Q_i$) in der Reihenfolge von dem Paket, welches die früheste planmäßige Übermittlungsbeendigungszeit aufweist, und zur gleichen Zeit durch Zuordnung der reservierten Bandbreiten zu allen aktiven Warteschlangen, in welchen Pakete, die übermittelt werden sollen, gespeichert sind, steuert;
**dadurch gekennzeichnet, dass** die Ablaufsteuerung (1-1) folgendes aufweist:

eine Gruppierungseinrichtung (3-3) zur Einteilung der Kopfpakete in die Warteschlangen ($Q_i$) in Gruppen ($C_i$) in Übereinstimmung mit einer planmäßigen Ressourcen-Belegungszeit, welches Verhältnis als das Verhältnis zwischen der Paketlänge des Kopfpaketes in einer jeden Warteschlange ($Q_i$) und der reservierten Bandbreite ($\Phi_i$) definiert ist;

eine Gruppenverwaltungseinrichtung (3-4) zum Halten von Paketen als erstrangige Pakete, welche die früheste planmäßige Übermittlungsbeendigungszeiten unter den Paketen in einer Gruppe ($C_i$) aufweisen, für alle Gruppen;

eine Innengruppen-Selektiereinrichtung (3-5) zum Selektieren des Paketes als das erstrangige Paket, welches die früheste planmäßige Übermittlungsbeendigungszeit für die Gruppe aufweist, wenn ein Paket innerhalb der Gruppe entfernt oder hinzugefügt wird; und

eine Zwischengruppen-Selektiereinrichtung (3-6) zum Selektieren des Paketes als das Top-Prioritäts-Übermittlungspaket, welches die früheste planmäßige Übermittlungsbeendigungszeit aufweist, aus der Menge der erstrangigen Pakete innerhalb der Gruppen ($C_i$).

3. Eine Paketübermittlungssteuerungsvorrichtung gemäß Anspruch 2, wobei:

die Ablaufsteuerung (1-1) mit einer Berechnungseinrichtung (3-2) des reservierten Bandbreitenverwendungsverhältnisses versehen ist zum Berechnen des reservierten Bandbreiten-Verwendungsverhältnisses, welches als das Verhältnis eines kumulativen Wertes der reservierten Bandbreiten für die aktiven Warteschlangen unter Berücksichtigung der Bandbreiten definiert ist; und wobei

die Zwischengruppenselektiereinrichtung (3-6) derart strukturiert ist, um die planmäßige Übermittlungsbeendigungszeit basierend auf einer Übermittlungsstartreferenzzeit eines jeden erstrangigen Paketes, basierend auf der planmäßigen Ressourcen-Belegungszeit und basierend auf das reservierte Bandbreitenverwendungsverhältnis zu berechnen.

4. Eine Paketübermittlungs-Steuerungsvorrichtung gemäß Anspruch 2 oder 3, wobei:

die Innengruppen-Selektiereinrichtung (3-5) derart strukturiert ist, um die Pakete in einer Gruppe in der Reihenfolge von der frühesten planmäßigen Übermittlungsbeendigungszeit zu sortieren, und wobei
die Gruppenverwaltungseinrichtung (3-4) derart eingerichtet sein kann, um die Pakete, welche in der Reihenfolge von der frühesten planmäßigen Übermittlungsbeendigungszeit sortiert sind, für jede Gruppe zu halten.

5. Eine Paketübermittlungs-Steuerungsvorrichtung gemäß Anspruch 2 oder 3, wobei:

die Innengruppen-Selektiereinrichtung (3-5) derart strukturiert ist:

um die Selektion durchzuführen durch Herumschalten zwischen der Verarbeitung zur Selektion von lediglich dem erstrangigen Paket, welches die früheste planmäßige Übermittlungsbeendigungszeit von den Paketen in einer Gruppe aufweist, und der Verarbeitung zum Sortieren dieser in der Reihenfolge von dem einen an, welches die früheste planmäßige Übermittlungsbeendigungszeit aufweist;

um die Verarbeitung durchzuführen zum Sortieren in der Reihenfolge von dem einen, welches die früheste planmäßige Übermittlungsbeendigungszeit aufweist, wenn die Übermittlungszeit eines Pakets in Übermittlung größer als eine zuvor festgelegte Zeit ist; und

um die Verarbeitung durchzuführen zum Selektieren von lediglich dem erstrangigen Paket, welches die früheste planmäßige Übermittlungsbeendigungszeit aufweist, wenn die Übermittlungszeit des Paketes in Übermittlung nicht größer als eine zuvor festgelegte Zeit ist.

**6.** Eine Paketübermittlungs-Steuerungsvorrichtung gemäß einem der Ansprüche 2, 3 und 4, wobei die Innengruppen-Selektiereinrichtung (3-5) derart eingerichtet ist, um das Paket zu selektieren, welches die früheste planmäßige Übermittlungsbeendigungszeit aufweist, basierend auf lediglich der Übermittlungsstartreferenzzeit eines jeden Paketes in der Gruppe ($C_i$) oder basierend auf der Übermittlungsstartreferenzzeit und der planmäßigen Ressourcen-Belegungszeit.

**7.** Eine Paketübermittlungs-Steuerungsvorrichtung gemäß Anspruch 4 oder 5, wobei die Innengruppen-Selektiereinrichtung (3-5) derart eingerichtet ist, um die Pakete in der Gruppe ($C_i$) in der Reihenfolge von dem einen, welches die früheste planmäßige Übermittlungsbeendigungszeit aufweist, zu sortieren, basierend auf lediglich der Übermittlungsstartreferenzzeit eines jeden Paketes in der Gruppe ($C_i$) oder basierend auf der Übermittlungsstartreferenzzeit und der planmäßigen Ressourcen-Belegungszeit.

**8.** Eine Paketübermittlungs-Steuerungsvorrichtung gemäß einem der Ansprüche 2 bis 7, wobei die Gruppierungseinrichtung (3-3) derart eingerichtet ist, um die Kopfpakete in den Warteschlangen zu Gruppen zuzuordnen, durch Unterscheidung des Typs des Anwendungspaketes, welches Verkehrsmerkmale aufweist, für welche die planmäßige Ressourcen-Belegungszeit spezifiziert ist.

**9.** Eine Paketübermittlungs-Steuerungsvorrichtung gemäß einem der Ansprüche 2 bis 8, wobei:

eine Bereitstellung einer Vielzahl von Ablaufsteuerungen (4-5, 4-6) gemacht wird, welche verschiedene Verarbeitungen durchführen zur Zuordnung der Ressourcen eines gesamten Übermittlungssystems für Pakete, die in Multi-Warteschlangen gespeichert sind und die für alle Gruppen in Übereinstimmung mit der Klasse der Dienstgüte übereinstimmen; wobei

jede Ablaufsteuerung mit einer Einrichtung (3-5) versehen ist zum Selektieren des Paketes, welches die früheste planmäßige Übermittlungsbeendigungszeit aufweist, aus der Menge der Kopfpakete für jede Multi-Warteschlange; und wobei

eine Bereitstellung von einer Ablaufsteuerung (4-7) gemacht wird, zum Selektieren des Paketes, welches die früheste planmäßige Übermittlungsbeendigungszeit aufweist, aus der Menge der Pakete, die durch die Ablaufsteuerungen, welche zu den Multi-Warteschlangen gehören, selektiert werden.

**10.** Eine Paketübermittlungs-Steuerungsvorrichtung gemäß Anspruch 9, wobei wenigstens eine Ablaufsteuerung aus der Gruppe der Ablaufsteuerungen, die zu den Multi-Warteschlangen gehören, mit einer Vorrichtung versehen ist, zum Zuordnen von Bandbreiten einer festen Rate an Warteschlangen in den zugehörigen Multi-Warteschlangen und zum Selektieren des Paketes, welches die früheste planmäßige Übermittlungsbeendigungszeit aufweist.

**11.** Ein Paketübermittlungs-Ablaufsteuerungsverfahren, welches Pakete übermittelt durch Gewichtung der Reihenfolge der Übermittlung für Kopfpakete von Warteschlangen ($Q_i$) in der Reihenfolge von dem Paket, welches die früheste planmäßige Übermittlungsbeendigungszeit für Pakete aufweist, welche in einer Vielzahl von Warteschlangen gespeichert sind, zu welchen wenigstens reservierte Bandbreiten zugeordnet sind, die vorab individuell bestimmt wurden, und zur gleichen Zeit durch Zuordnung der Bandbreiten zu allen der aktiven Warteschlangen, in welchen Pakete, die übermittelt werden müssen, gespeichert sind,
**gekennzeichnet durch**:

den Verfahrensschritt der Zuordnung der Kopfpakete der Warteschlangen zu Gruppen ($C_i$) in Übereinstimmung mit planmäßigen Ressourcen-Belegungszeiten der Kopfpakete in den Warteschlangen;

den Verfahrensschritt der Selektierung des Paketes als ein erstrangiges Paket, welches die früheste planmäßige Übermittlungsbeendigungszeit für eine Gruppe ($C_i$) aufweist, wenn ein Paket in der Gruppe ($C_i$) entfernt oder zu Paketen hinzugefügt wird, und des Haltens dieses selektierten Paketes; und

den Verfahrensschritt des Selektierens des Paketes als ein Top-Prioritäts-Übermittlungspaket, welches die früheste planmäßige Übermittlungsbeendigungszeit aus der Menge der erstrangigen Pakete in den Gruppen ($C_i$) aufweist.

12. Ein Paketübermittlungs-Ablaufsteuerungsverfahren gemäß Anspruch 11, ferner einen Schritt der Berechnung eines reservierten Bandbreitenverwendungsverhältnisses von aktiven Warteschlangen und den Schritt der Berechnung einer planmäßigen Übermittlungsbeendigungszeit während der Selektion unter den Gruppen aufweisend, basierend auf einer Übermittlungsstartreferenzzeit des erstrangigen Paketes, basierend auf der planmäßigen Ressourcen-Belegungszeit und basierend auf dem reservierten Bandbreitenverwendungsverhältnis.

13. Ein Paketübermittlungs-Ablaufsteuerungsverfahren gemäß Anspruch 11 oder 12 ferner den Schritt des Sortierens der Pakete in einer Gruppe ($C_i$) in der Reihenfolge von der frühesten planmäßigen Übermittlungsbeendigungszeit und des Haltens der sortierten Pakete aufweisend, wenn die Selektion in den Gruppen ($C_i$) erzielt worden ist.

14. Ein Paketübermittlungs-Ablaufsteuerungsverfahren gemäß Anspruch 11 oder 12, ferner den Schritt des Durchführens der Verarbeitung zum Sortieren in der Reihenfolge von dem Paket, welches die früheste planmäßige Übermittlungsbeendigungszeit hat, aufweisend, wenn die Übermittlungszeit eines Paketes in Übermittlung größer als eine zuvor festgelegte Zeit ist, und den Schritt des Durchführens der Verarbeitung zum Selektieren von lediglich dem erstrangigen Paket, welches die früheste planmäßige Übermittlungsbeendigungszeit hat, aufweisend, wenn die Übermittlungszeit des Paketes in Übermittlung nicht größer als eine zuvor festgelegte Zeit ist, wenn die Selektion in den Gruppen ($C_i$) erzielt worden ist.

15. Ein Paketübermittlungs-Ablaufsteuerungsverfahren gemäß Anspruch 11, 12 oder 14, ferner den Schritt der Selektion des Paketes, welches die früheste planmäßige Übermittlungsbeendigungszeit hat, aufweisend, basierend auf lediglich der Übermittlungsstartreferenzzeit eines jeden Paketes in der Gruppe ($C_i$) oder basierend auf der Übermittlungsstartreferenzzeit und der planmäßigen Ressourcen-Belegungszeit, wenn die Selektion in den Gruppen ($C_i$) erzielt worden ist.

16. Ein Paketübermittlungs-Ablaufsteuerungsverfahren gemäß Anspruch 13 oder 14, ferner den Schritt des Sortierens der Pakete in einer Gruppe ($C_i$) in der Reihenfolge von dem einen, welches die früheste planmäßige Übermittlungsbeendigungszeit hat, aufweisend, basierend auf lediglich der Übermittlungsstartreferenzzeit eines jeden Paketes in der Gruppe ($C_i$) oder basierend auf der Übermittlungsstartreferenzzeit und der planmäßige Ressourcen-Belegungszeit, wenn die Selektion in den Gruppen ($C_i$) erzielt worden ist.

17. Ein Paketübermittlungs-Ablaufsteuerungsverfahren gemäß einem der Ansprüche 11 bis 16, ferner einen Schritt der Zuordnung des Kopfpaketes von Warteschlangen zu Gruppen ($C_i$) aufweisend durch Unterscheidung des Typs des Anwendungspaketes, welches Verkehrsmerkmale aufweist, für welche die planmäßige Ressourcen-Belegungszeit spezifiziert ist, wenn die Selektion in den Gruppen ($C_i$) erzielt worden ist.

**Revendications**

1. Appareil de commande de transfert de paquet pour des paquets stockés dans une pluralité de files ($Q_i$) auxquelles sont allouées des bandes passantes réservées déterminées individuellement à l'avance, chaque file comprenant un paquet d'en-tête et d'autres paquets, comprenant :

    un dispositif d'ordonnancement (1-1) pour commander le transfert en pondérant l'ordre de transfert pour chaque paquet d'en-tête dans les files,

    **caractérisé en ce que** le dispositif d'ordonnancement comprend :

    un moyen (3-4) pour allouer les paquets d'en-tête dans les files dans des groupes ($C_i$) selon le rapport entre la longueur de paquet du paquet d'en-tête dans chaque file ($Q_i$) et la bande passante réservée ($\phi_i$) du paquet ; et
    un moyen (3-5) pour sélectionner le paquet ayant le temps de fin de transfert ordonnancé le plus tôt comme paquet de transfert de priorité supérieur entre chaque paquet du premier ordre à l'intérieur des groupes ($C_i$).

2. Appareil de commande de transfert de paquet pour des paquets stockés dans une pluralité de files ($Q_i$) auxquelles sont allouées des bandes passantes réservées ($\phi_i$) individuellement déterminées à l'avance, chaque file comprenant un paquet d'en-tête et d'autres paquets, l'appareil pourvu d'au moins un dispositif d'ordonnancement (1-1) qui commande le transfert en pondérant l'ordre de transfert pour les paquets d'en-tête dans les files ($Q_i$) dans l'ordre à partir du paquet ayant le temps de fin de transfert ordonnancé le plus tôt, au même moment, en allouant les bandes passantes réservées à toutes les files actives dans lesquelles les paquets à transférer sont stockés ;

**caractérisé en ce que** le dispositif d'ordonnancement (1-1) comprend :

un moyen de groupement (3-3) pour diviser les paquets d'en-tête dans les files ($Q_i$) en groupes ($C_i$) selon un temps d'occupation de ressource ordonnancé dont le rapport est défini comme le rapport entre la longueur de paquet du paquet d'en-tête dans chaque file ($Q_i$) et la bande passante réservée ($\phi_i$)

un moyen de gestion de groupe (3-4) pour contenir des paquets ayant les temps de fin de transfert ordonnancés les plus tôt parmi les paquets dans un groupe ($C_i$) pour tous les groupes comme des paquets du premier ordre ;

un moyen de sélection intragroupe (3-5) pour sélectionner le paquet ayant le temps de fin de transfert ordonnancé le plus tôt pour le groupe comme le paquet du premier ordre lorsqu'un paquet est effacé ou ajouté intragroupe ; et

un moyen de sélection de l'intergroupe (3-6) pour sélectionner le paquet dans le temps de fin de transfert ordonnancé le plus tôt comme le paquet de transfert de priorité supérieure parmi les paquets du premier ordre à l'intérieur des groupes ($C_i$).

3. Appareil de commande de transfert de paquet selon la revendication 2, dans lequel :

ledit dispositif d'ordonnancement (1-1) est pourvu d'un moyen de calcul de rapport d'utilisation de bande passante réservée (3-2) pour calculer le rapport d'utilisation de bande passante réservée défini comme le rapport d'une valeur cumulative des bandes passantes réservées pour les files actives par rapport aux bandes passantes ; et

ledit moyen de sélection intergroupe (3-6) est structuré pour calculer le temps de fin de transfert sur la base d'un temps de référence du début de transfert de chaque paquet du premier ordre, le temps d'occupation de ressource ordonnancé et le rapport d'utilisation de bande passante réservée.

4. Appareil de commande de transfert de paquet selon la revendication 2 ou 3, dans lequel :

ledit moyen de sélection intragroupe (3-5) est structuré pour trier les paquets dans un groupe dans l'ordre à partir du temps de fin de transfert ordonnancé le plus tôt, et

ledit moyen de gestion de groupe (3-4) peut-être constitué afin de contenir les paquets triés dans l'ordre à partir du temps de fin de transfert ordonnancé le plus tôt pour chaque groupe.

5. Appareil de commande de transfert de paquet selon la revendication 2 ou 3, dans lequel :

ledit moyen de sélection intragroupe (3-5) est structuré :

pour réaliser la sélection en commutant entre le traitement pour sélectionner seulement le paquet du premier ordre ayant le temps de fin de transfert ordonnancé le plus tôt à partir des paquets dans un groupe et le traitement pour les trier dans l'ordre à partir de celui ayant le temps de fin de transfert ordonnancé le plus tôt ;

pour réaliser le traitement pour trier dans l'ordre à partir de celui ayant le temps de fin de transfert ordonnancé le plus tôt lorsque le temps de transfert d'un paquet en transmission est plus qu'un temps prédéterminé ; et

pour réaliser le traitement pour sélectionner seulement le paquet du premier ordre ayant le temps de fin de transfert ordonnancé le plus tôt lorsque le temps de transfert du paquet en transmission n'est pas plus qu'un temps prédéterminé.

6. Appareil de commande de transfert de paquet selon l'une quelconque des revendications 2, 3 et 5, dans lequel le moyen de sélection de groupe intragroupe (3-5) est constitué afin de sélectionner le paquet ayant le temps de fin de transfert ordonnancé le plus tôt sur la base seulement dudit temps de référence du début de transfert de chaque paquet dans le groupe ($C_i$) ou dudit temps de référence du début de transfert et dudit temps d'occupation de ressource ordonnancé.

7. Appareil de commande de transfert de paquet selon la revendication 4 ou 5, dans lequel ledit moyen de sélection intragroupe (3-5) est constitué afin de trier les paquets dans le groupe ($C_i$) dans l'ordre à partir de celui ayant le temps de fin de transfert ordonnancé le plus tôt sur la base seulement dudit temps de référence du début de transfert de chaque paquet dans le groupe ($C_i$) ou dudit temps de référence du début de transfert et dudit temps d'occupation de ressource ordonnancé.

8. Appareil de commande de transfert de paquet selon l'une quelconque des revendications 2 à 7, dans lequel ledit moyen de groupement (3-3) est constitué afin d'allouer les paquets d'en-tête dans les files aux groupes en discriminant le type de paquet d'application ayant des caractéristiques de trafic pour lesquelles le temps d'occupation de ressource ordonnancé est spécifié.

**19**

**9.** Appareil de commande de transfert de paquet selon l'une quelconque des revendications 2 à 8 dans lequel :

la fourniture est faite d'une pluralité de dispositifs d'ordonnancement (4-5, 4-6) pour réaliser un traitement différent pour l'allocation des ressources d'un système de transmission entier pour des paquets stockés dans de multiples files différant pour tous les groupes selon la classe de la qualité de service ;
chaque dispositif d'ordonnancement est pourvu d'un moyen (3-5) pour sélectionner le paquet ayant le temps de transfert ordonnancé le plus tôt parmi la quantité de paquets d'en-tête pour chaque file multiple ; et
la fourniture est faite d'un dispositif d'ordonnancement (4-7) pour sélectionner le paquet ayant le temps de fin de transfert ordonnancé le plus tôt parmi des paquets sélectionnés par le dispositif d'ordonnancement correspondant aux multiples files.

**10.** Appareil de commande de transfert de paquet selon la revendication 9, dans lequel au moins un dispositif d'ordonnancement parmi les dix dispositifs d'ordonnancement correspondants aux multiples files est pourvu d'un moyen pour allouer des bandes passantes d'un rapport fixe aux files dans les multiples files correspondantes et pour sélectionner les paquets ayant le temps de fin transfert ordonnancé le plus tôt.

**11.** Procédé d'ordonnancement de transfert de paquet qui transfert des paquets en pondérant l'ordre de transfert pour les paquets d'en-tête des files ($Q_i$) dans l'ordre à partir du paquet ayant le temps de fin transfert ordonnancé le plus tôt pour des paquets stockés dans une pluralité de files auxquelles sont allouées au moins des bandes passantes réservées individuellement déterminées à l'avance et, en même temps, allocation des bandes passantes à toutes les files actives dans lesquelles des paquets à transférer sont stockés,

**caractérisé par** :

l'étape d'allocation des paquets d'en-tête des files aux groupes ($C_i$) selon les temps d'occupation de ressource ordonnancés des paquets d'en-tête dans les files ;
l'étape de sélection du paquet ayant le temps de fin de transfert ordonnancé le plus tôt pour un groupe ($C_i$) comme un paquet du premier ordre lorsqu'un paquet est effacé ou ajouté aux paquets dans le groupe ($C_i$) et de maintien de ce paquet sélectionné ; et
l'étape de sélection du paquet ayant le temps de fin de transfert ordonnancé le plus tôt parmi les paquets du premier ordre dans les groupes ($C_i$) comme le paquet de transfert de priorité supérieure.

**12.** Procédé d'ordonnancement de transfert de paquet selon la revendication 11, comprenant en outre une étape de calcul d'un rapport d'utilisation de bande passante réservée de files actives et l'étape de calcul d'un temps de fin de transfert ordonnancé pendant la sélection parmi les groupes sur la base d'un temps de référence du début de transfert du paquet de premier ordre, du temps d'occupation de ressource ordonnancé et du rapport d'utilisation de bande passante réservée.

**13.** Procédé d'ordonnancement de transfert de paquet selon la revendication 11 ou 12, comprenant en outre, lors de la réalisation de la sélection dans les groupes ($C_i$), de l'étape de tri des paquets dans un groupe ($C_i$) dans l'ordre à partir du temps de fin de transfert ordonnancé le plus tôt et maintien des paquets triés.

**14.** Procédé d'ordonnancement de transfert de paquet selon la revendication 11 ou 12, comprenant en outre, lors de la réalisation de la sélection dans les groupes ($C_i$), de l'étape de réalisation du traitement pour trier dans l'ordre à partir du paquet ayant le temps de fin de transfert ordonnancé le plus tôt lorsque le temps de transfert d'un paquet dans la transmission est plus qu'un temps prédéterminé et pour réaliser le traitement pour sélectionner seulement le paquet du premier ordre ayant le temps de fin de transfert ordonnancé le plus tôt lorsque le temps de transfert du paquet dans la transmission n'est pas supérieur à un temps prédéterminé.

**15.** Procédé d'ordonnancement de transfert de paquet selon la revendication 11, 12 ou 14, comprenant en outre, lors de la réalisation de la sélection dans des groupes ($C_i$), de l'étape de sélection du paquet ayant le temps de fin de transfert ordonnancé le plus tôt sur la base seulement du temps de référence du début de transfert de chaque paquet dans le groupe ($C_i$) ou du temps de référence du début de transfert et du temps d'occupation de ressource ordonnancé.

**16.** Procédé d'ordonnancement de transfert de paquet selon la revendication 13 ou 14, comprenant en outre, lors de la réalisation de la sélection dans les groupes ($C_i$), de l'étape de tri des paquets dans un groupe ($C_i$) dans l'ordre à partir de celui ayant le temps de fin de transfert ordonnancé le plus tôt sur la base seulement du temps de référence du début de transfert de chaque paquet dans le groupe ($C_i$) ou du temps de référence du début de transfert et du temps d'occupation de ressource ordonnancé.

**17.** Procédé d'ordonnancement de transfert de paquet selon l'une quelconque des revendications 11 à 16, comprenant en outre, lors de la réalisation de la sélection dans les groupes ($C_i$), d'une étape d'allocation des paquets d'en-tête des files aux groupes ($C_i$) en discriminant le type de paquet d'application ayant les caractéristiques de trafic pour lesquelles le temps d'occupation de ressource ordonnancé est spécifié.

EP 0 989 770 B1

# Fig. 1

# Fig.2

(A)

(B)

CLUSTERING

EP 0 989 770 B1

# Fig.3A

g) | Flow No.(i) |
|:---:|
| Pocket len.(L) |
| $\alpha_i$ |
| $\phi_i$ |
| Pointer |

d) | Cluster No.($C_i$) |
|:---:|
| Flow No. (j) |
| $\alpha_i$ |
| $\beta_i$ |
| Pointer |

MULTI-QUEUE
MANAGING

3-1 —

Q₁ ▭▭▭ ◯
Q₂ ▭▭▭ ◯
⋮
Qᵢ ▭▭▭ ◯
Q_N ▭▭▭ ◯

Receive
Packet Tag.
①

3-3

$\beta_i$ CALCU-
LATION    CLUSTERING

⑮ $\beta_i = \dfrac{L_i}{\phi_i}$ ②  →  $C(\beta_i)$ ③

$\phi_b$ COMPUTING    $\gamma$ COMPUTING

±$\phi_j$  $\phi_b = \phi_b \pm \phi_j$ ⑬  →  $\gamma = \dfrac{\phi_b}{R}$ $\gamma$ ④

⑭

3-2

a) | Flow No. (j) |
|:---:|
| Pocket Len.(L) |
| Arival Time(t) |
| Pointer |

c) | Flow No.(j) |
|:---:|
| $\alpha_i$ |
| $\phi_i$ |

*1

# Fig.3B

f) Flow No.(j)

$\alpha_i$

$\beta_i$

NCP

3-4

CLUSTER MANAGING

$C_{1,K}$    $C_{1,2}$ $C_{1,1}$
□    ←□←▨ $C_1$

$C_{2,K}$    $C_{2,2}$ $C_{2,1}$
▨    ←▨←▨ $C_2$

$C_{M,K}$    $C_{M,2}$ $C_{M,K}$
□    ←□←▨ $C_M$

3-6

INTER-CLUSTER
SELECTION

⑤

⑥
Send
Packet Tag.($Q_i$)

⑨ ⑦

INSIDE-CLUSTER
SELECTION

3-5

⑯

⑧

OUTPUT
CONTROL

⑩

⑪

3-7

⑫

e) Flow No.(j)

$\alpha_i$

h) $C_j$

b) Pointer

*1

# Fig.4

# Fig.5